# EUROPEAN PATENT APPLICATION

(11) **EP 2 416 088 A2**
(43) Date of publication of application: **08.02.2012**
(21) Application number: 11006342.7
(22) Date of filing: 02.08.2011
(51) Int. Cl.: F24J 2/52

(54) **Connection element for support structures for solar panels and structure comprising a plurality of elements**

(30) Priority: 04.08.2010 IT MI20101484
(71) Applicant: Gianazza Angelo S.p.A., 20025 Legnano MI (IT)
(72) Inventor: Rinaldi, Mauro, 20082 Binasco (PV) (IT); Alberti, Andrea, 20024 Garbagnate Milanese (MI) (IT)
(74) Representative: Jaumann, Paolo

(57) **Abstract**

Connecting element for supporting structures for solar panels, in particular photovoltaic panels, characterized in that it comprises a base (1), comprising a connecting face (2) on which two seats (3, 4) open that are suitable for receiving tubes or bars (17', 17") arranged on top of one another, along different directions, optionally at right angles to one another, and a supporting member, which is suitable for being connected to said base in a dismantlable manner, such as to prevent access to said connecting face, and having a resting surface (21', 21") for a solar panel (14). A structure made from a plurality of said elements.

## Description

The object of the present invention is a connecting element for supporting structures for solar panels, in particular photovoltaic panels.

In the field of solar panel technology, in particular photovoltaic panels, the panels have to be placed on the ground in a stable manner, at an optimum inclination, in general around 30° with respect to the ground in middle latitudes.

In general, the panels are arranged in parallel rows, placed at a distance from one another in such a manner as to optimize exposure of the panel, avoiding reciprocal shadowing between the rows, at least in the hours of greatest sunlight, and the exploitation of the extent of terrain available. In order to obtain this, the panels are generally fixed to metal structures that have to be assembled beforehand *in situ,* given the dimensions of the panels, given that a photovoltaic plant requires a great deal of space in relation to the power that can be generated. Known metal structures require a long time to assemble, are rather heavy and require a great variety of components, including a significant quantity of bolts or similar devices to make the connections. Accordingly, it would be desirable to develop supporting systems for solar panels that enable assembly operations to be reduced and simplified, a smaller number and a smaller variety of components to be used and structures of various dimensions to be created without having to vary the components.

Further, it is not always easy to anchor the structure and it would therefore be desirable to be able to create a very extended structure that required a reduced number of anchoring points with respect to the extent of the plant, without, however, increasing the structural and assembly complexity thereof.

The problems outlined above have now been solved by a connecting element for supporting structures for solar panels, in particular photovoltaic panels, characterized in that it comprises a base, comprising a connecting face on which two seats open that are suitable for receiving tubes or bars arranged on top of one another, along different directions, which are preferably substantially at right angles to one another, and a supporting member, which is suitable for being connected to said base in a dismantlable manner, such as to prevent access to said connecting face, and having a resting surface for a solar panel. The base preferably has a resting face, preferably opposite said connecting face, that is suitable for being placed on the ground, this term being defined as any surface on which the structure can be placed, for example also a flat roof, a floor or other surface.

The base and the supporting member can be connected in the known manner, for example, by a screw connection; more preferably the connection can be a bayonet connection.

The resting surface can have an inclination corresponding to the inclination that the panel has to have in relation to the ground. At the resting surface, means are preferably provided for fixing the panel to the supporting member.

According to an embodiment of the invention, the connecting face of the base is substantially parallel to the surface on which the resting face can be rested.

The invention also relates to a base and a supporting member as specified above and to a supporting structure for solar panels, in particular photovoltaic panels, comprising a plurality of connecting elements as specified above and a plurality of tubes or bars connecting said connecting elements.

In the structure there are preferably connecting elements of different type, preferably of two types, a first type with a supporting member intended for supporting the panel in the edge positioned at the bottom, a second type with a supporting member intended for supporting the panel in the edge positioned at the top. Preferably, in the case of the first type, the supporting member is provided, at the resting surface, with a projection that is suitable for preventing the sliding of a resting panel. According to a preferred embodiment of the invention, the base is the same in both types of element, only the supporting member being different, being higher in the case of the second type, i.e. with a greater distance between connecting means to the connecting face of the base, and lower in the first type.

Both the supporting members and the base preferably have an almost frustoconical shape, such that when the element is assembled, the side walls of the base and of the supporting member are substantially aligned, so that also the element has an almost frustoconical shape, bearing in mind that fact that the bases are not parallel. Other preferred shapes can be easily devised. A preferred but non-exclusive embodiment of the invention will now be illustrated by way of example with the help of the attached figures, of which:
figure 1 is a schematic perspective view of a base according to the present invention;
figure 2 is a schematic plan view of the base in figure 1;
figure 3 is a schematic bottom view of the base in figure 1;
figures 4 and 5 are schematic perspective views of a supporting member according to the present invention for an element of the first and of the second type respectively, as disclosed above;
figures 6 and 7 are schematic views respectively of an element of the first and of the second type that are assembled (for the sake of simplicity without the tubes of the supporting structure); figure 8 is a schematic perspective view of a supporting structure for photovoltaic panels according to the present invention that is partially assembled and has some panels positioned;
figure 9 is a schematic perspective view of a detail of a structure as specified above, in which it is illustrated how a connecting element and panel can be fixed together, according to one possible embodiment of the invention;
figure 10 is a schematic section view of an element-supporting member according to the present invention;
figures 11 and 13 are schematic perspective views of a supporting structure for photovoltaic panels according to an embodiment of the present invention that is different from the embodiment in figure 8, the supporting structure being partially assembled and with some panels positioned;
figure 12 is a schematic perspective view of an element of the first type according to a different embodiment of the invention.

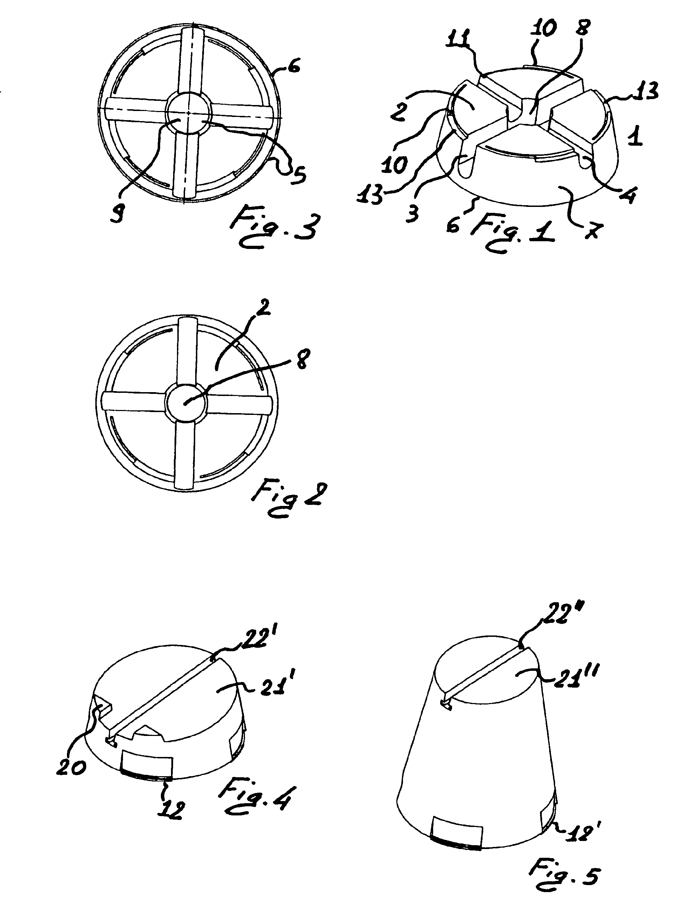

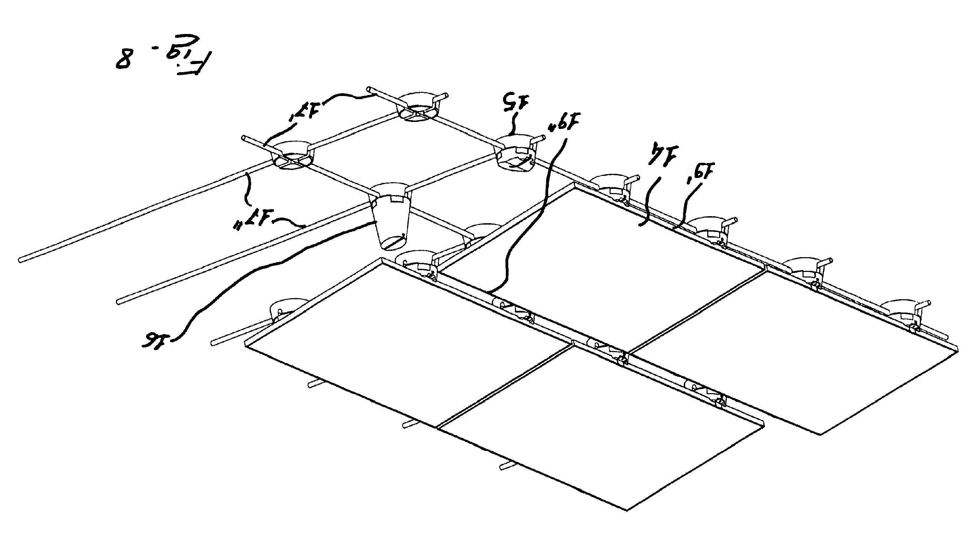

With reference to figures 1 to 3, the base 1, which may have a substantially frustoconical shape, comprises a connecting face 2 on which the seats 3 and 4 open that are suitable for receiving two tubes or bars, as visible in figure 8 that are arranged on top of one another and along directions that are substantially at right angles to one another. According to the embodiment shown, it is clear that the seats partially penetrate one another and will have different depths from the connecting face.

Opposite the connecting face, the base has a resting face 5 that is intended for being rested on the ground. According to a preferred embodiment, the base can be made hollow, preferably open, more preferably open on the side of the resting face, as shown in the figures. In this manner, it can easily be made by moulding, more preferably for injection moulding, and accumulations rain water, detritus or other matter will not be encouraged. Also the supporting members, like the base, will preferably be made by injection moulding suitable plastic, for example HDPE; the material can also consist of recycled material or comprise recycled material.

In the embodiment disclosed above, the resting face will consist of the surface of the bottom edge 6 of the side wall 7 and, optionally, of other parts that are made in such a manner as to define the plane intended for being arranged on the ground. For example a central part 8, that opens in the connecting face as a cylindrical or conical cavity, whereas from the side of the resting face it is a protrusion that extends inside the base and can terminate with a flat wall 9, preferably at said resting plane on the ground. According to a preferred embodiment of the invention, the base can still be anchored to the ground, which anchoring can occur in the known manner, for example by means of screws and plugs. The anchoring, can, if desired, occur on the flat wall 9.

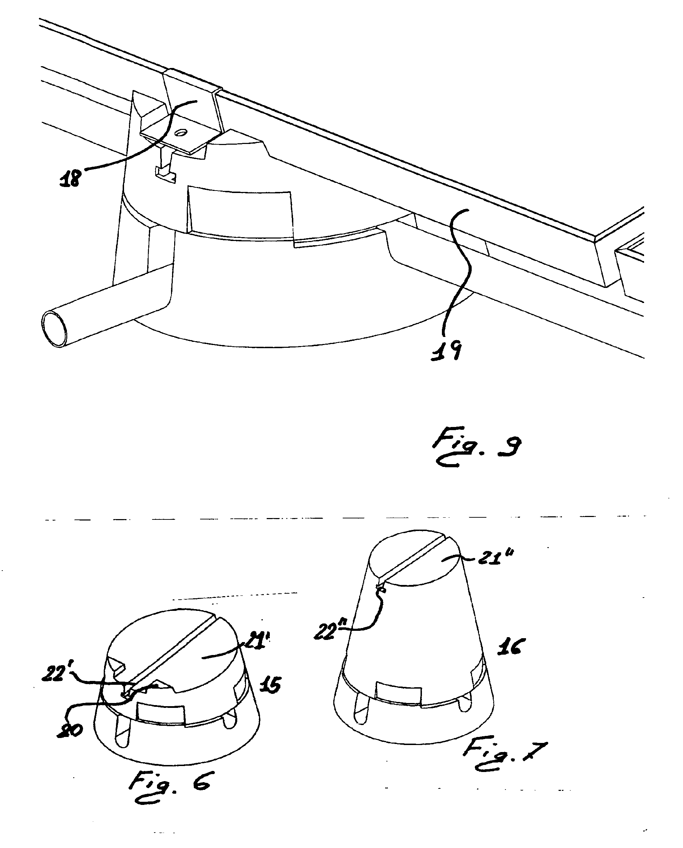

As mentioned, the base is intended for being connected to a supporting member. According to a preferred embodiment, the base and the supporting member are provided with a bayonet-fitting system. For this purpose, at the connecting face, more preferably at the edge 11 thereof, a suitable profile 10 will be provided that is intended for cooperating with a corresponding profile 12, 12' provided on the supporting member, as is visible in figures 4 and 5 in which the supporting members for the two types of element are shown. For the connection to the base, the connecting means can be completely similar in the two cases, the base being preferably of a single type. The profile can affect a part of the edge of the base, and be divided into several separate portions, and the same can also occur for the corresponding profile belonging to the supporting members. The edge part 13 that is not affected by the profile can serve to position the corresponding profile belonging to the supporting member; subsequent rotation of the supporting member in relation to the base, in the shown case, by about a quarter of a revolution, there being four portions with the profile, which affect a quarter of the edge, will enable the profiles to engage together to achieve the coupling in the manner shown in figures 6 and 7 that show an element of the first 15 and of the second type 16 respectively. In the case in point, the portions are arranged symmetrically (central symmetry) with respect to the reciprocal rotation axis. Asymmetrical arrangements can also be examined, and/or arrangements with a number of portions affected by the profiles that is other than four to set precise reciprocal positioning of the base and supporting member, for example with a precise determination of the orientation of the tubes or bars (orientation positioned at the top and orientation positioned at the bottom) with respect to the panels once they have been assembled. Nevertheless, it generally suffices for the direction of the tubes and bars to enable the supporting structure to be fitted, which the four symmetrical portions arrangement also permits, leaving the user the choice of definitive orientation. The bayonet fittings are of known type and need not be described further; variants on what has now been disclosed can also be made, according to the knowledge of those skilled in the art.

Also the supporting members can be hollow, open at the bottom at the face where the connecting means for connecting to the base are provided, also in consideration of the production method.

The supporting members have a resting surface intended for supporting and fixing the panel.

The resting surface is preferably tilted in such a manner as to give the panel the desired inclination, according to a particular embodiment of the invention comprised between 25° and 35°, normally about 30°, a value that optimizes exposure in medium latitudes, according to another embodiment of the invention, with lower values, for example around 10°. One element of the first type and one of the second type must be assembled in the supporting structure at a distance that is such that, taking account of the different heights thereof, the resting surfaces can be substantially aligned, as shown in figure 8. According to one possible embodiment of the invention, four elements can be provided to support a panel 14, two of the first and two of the second type, but different solutions are also possible. As is visible from figure 8, the elements will be substantially arranged in a matrix, with a series of rows connected by a first series of tubes or bars 17', that are positioned substantially parallel to one another, and a series of columns connected by a second series of tubes or bars 17", that, preferably, will be arranged substantially parallel to one another and at righting angles to the first series, even if lying on different planes that are parallel and on top of one another. As mentioned, a pair of tubes or bars, one of the first and one of the second series, will be received in the corresponding seats of a base; then a suitable type of supporting member connected to the base will lock the pair of tubes or bars at the top. The tolerance between seats, supporting members and tubes or bars can be chosen suitably, for example to give a certain stiffness to the structure, hindering the sliding of tubes or bars in the seats. Or other locking systems can be chosen, such as suitably positioned abutments on the tubes or on the bars. Alternatively, it is also possible to use anchoring to the ground of at least part of the bases as a basis, which combined, with the connection of the panels to the elements may be sufficient to ensure an appropriate stability for the structure. The resting surfaces are preferably provided with means to enable the panels to be fixed, preferably through an edge of the panel. According to a preferred embodiment, at said surfaces 21 and 21', with reference to figures 6 and 7, there is a T-shaped groove 22', 22" that is suitable for receiving and retaining the head of a fixing screw. A nut screwed onto the shaft of the screw, as shown in figure 9, is suitable for retaining a bracket 18 that is of a shape that is suitable for retaining the panel by the edge 19. The T-shaped grooves, according to a preferred embodiment of the invention, can be arranged in the direction of the steepest incline of the resting surface. In this manner it will be possible to retain the panel by the edge arranged below 19' and the edge arranged above 19", with the panel assembled, as indicated in figure 8. Fixing systems with screw, nut and bracket of this type are known and commonly used in this sector, and the presence of the T-shaped grooves enables the use thereof also with connecting elements according to the present invention. Obviously, the distance between the elements will be such as to position the two edges of the panel on the resting surface in such a manner as to enable fixing in the disclosed manner.

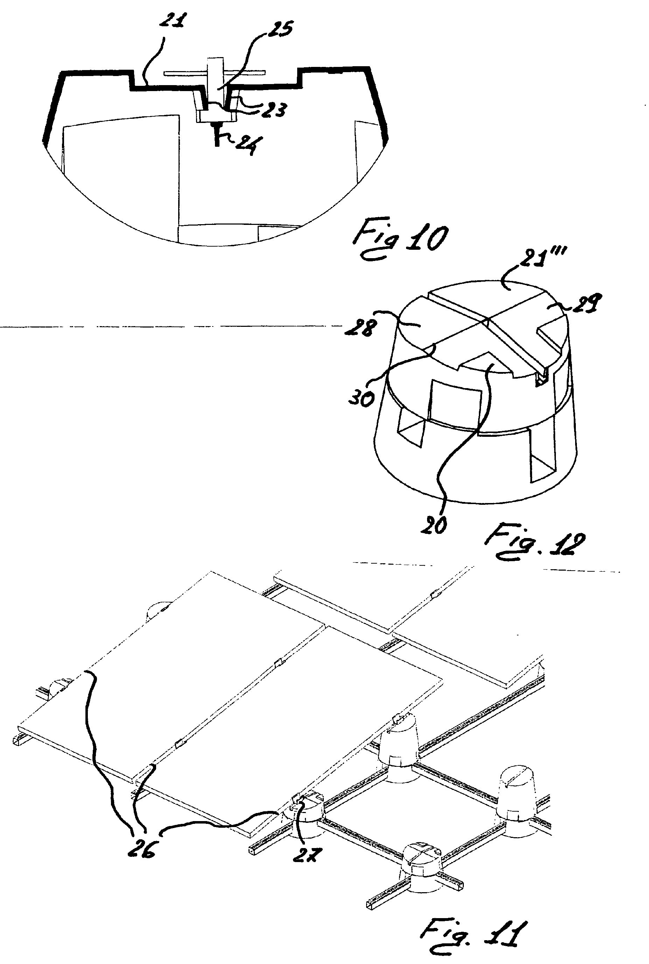

From figure 10 it can be seen how the T-shaped groove can be made with the sides open. Two side portions 23, joined on one side to the resting surface, indicated here with reference 21, (what follows can apply both to the supporting member of the first type and of the second type of element) are able to retain the head of the screw, in particular when it is, for example, clamped with a hammer nut. A bottom portion 24 of a suitable section for avoiding excessive deformation is suitable for preventing the screw 25 falling inside the supporting member when the screw is not locked by the nut. As can be seen, this bottom portion can be separated from the side portions. Other solutions are nevertheless possible, for example with a closed T-shaped groove. The exemplified open shape, however, enables the supporting member to be made by moulding, with a simple mould consisting of two half moulds without the need for inserts or similar solutions, as there are no undercuts in the opening direction of the half moulds.

If deemed appropriate, other fixing systems can nevertheless be adopted, also chosen from known types of fixing system.

The height of the supporting members is not only determined by the inclination to give the panel but also by how much it is desired that the panel should remain raised above the ground, also in order to protect the panel from soiling, enable appropriate circulation of air and thus good cooling and/or encourage access to the space underneath the panel in the structure.

According to a preferred embodiment, with particular reference to figures 4 and 6, the supporting member of the first type of element has, at the resting surface 21, a projection, for example a step 20, that is suitable for preventing the sliding of the panel when resting in an assembly position, even if the fixing has not yet been made. This facilitates the fixing, in addition to providing greater stability after fixing and more precise positioning.

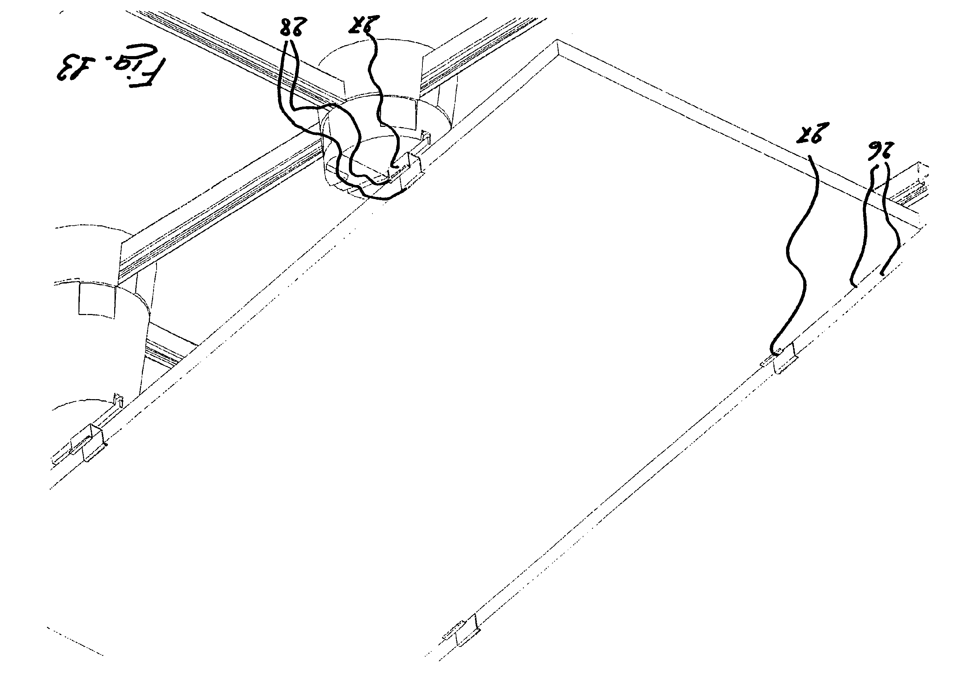

Alternatively to the structure shown in figure 8, the assembly shown in figures 11 and 13 is possible in which the panels are fixed to the supporting members for the sides 26 intended for remaining inclined. In this case, as is visible in the figures, two panels can be fixed, for the respective mutually facing edges, to the same pair of supporting members, one of the former and the other of the latter type. In the case of a fixing system of the type disclosed above, use can be made of a modified bracket 27 in such a manner as to retain the opposite edges of both panels; as is detectable from the figures, in particular figures 13, the bracket can be, according to a possible embodiment, substantially U-shaped with two wings 28 that project outwards. With this solution, it is preferable for the edge of the panel located below (also like the one located above) to be able to be positioned also outside the resting surface of the supporting member. In such a case it is preferable that the step 20 is not present even on the first type of supporting member or that the step does not anyway interfere with the positioning of the panel. In addition to the obvious solution of providing supporting members for elements of the first type devoid of such a step or projection, that are thus similar to the supporting members for elements of the second type, recourse can be made to elements of the first type like the one in figure 12. The resting surface 21 "' is in this case divided into two surface portions, 29 and 28, with an inclination corresponding to that of the panel but with a different orientation. The orientation is preferably opposite, this implies that they are separated by a substantially horizontal line 30. One of the surface portions can have the projection or step 20 and the other can be devoid of the projection or step 20. By assembling the element on the structure with the suitable orientation, or by connecting the supporting member to the base with the suitable orientation, if the connecting means provided on the connecting face of the base and those corresponding to the supporting member permit the different orientations, it can be decided if the structure with the panels will have a configuration as in figure 8 or as in figure 13.

In this manner, a sole type of element can be used for different types of assembly of the same size of panel or of panels of different sizes. The two surface portions can have the same inclination as an absolute value, or different inclinations corresponding to different inclinations of the panel, if deemed appropriate. It is clear that also the supporting members of the elements of the second type can have portions of the resting surface with different inclinations, if it is desired to increase the versatility thereof. Elements of the first type can also be provided with this feature, even in the absence of the step or projection, or where it is provided on both surface portions if the object is only that of being able to give the panel different inclination values at will with only one type of component.

As mentioned, both the base and the supporting members can be hollow and open at one face. In combination with a particular shape, such as, for example, the frustoconical shape shown in the figures, it will be possible to stack components with other identical components, thus reducing the volume for storage and transport.

A set model of element clearly permits significant tolerance on the size of the panels for which it can be used, in view of the possibility of assembling the structure with the distances between the elements on the basis of specific needs, provided that sufficient alignment of the resting surfaces and the compatibility of the supporting members with the fixing means used for the panel is still assured. According to one possible embodiment, the maximum diameter of the base can be between 10 and 30 cm, the height from the ground of the bottom edge of the panel between 10 and 20 cm. The latter reduces the need to provide many different sizes.

Those skilled in the art will also be able to decide the thickness (for example between 2 and 5 mm) in such a manner as to enable easy moulding, also providing reinforcements or walls that are thicker in the opportune positions on the product. The choice of a plastic material also eliminates the possibility of galvanic coupling between the supporting structure and the panel, thus combating electrochemical corrosion.

It is clear that the tubes or bars can be made of any suitable material, for example a metal material, and that tubes are preferable for reasons of weight; they may have a round, square or any type of section that is deemed to be opportune. The shape of the seats that are suitable for receiving the tubes will be designed accordingly.

## Claims

1. Connecting element for supporting structures for solar panels, in particular photovoltaic panels, **characterized in that** it comprises a base (1), comprising a connecting face (2) on which two seats (3, 4) open that are suitable for receiving tubes or bars (17', 17") which are arranged on top of one another and in different directions, optionally at right angles to one another, and a supporting member suitable for being connected to said base in a removable manner so as to prevent access to said connecting face and having a resting surface (21', 22") for a solar panel (14).

2. Element according to claim 1, wherein the base has a resting face (6), opposite said connecting face, suitable for being placed on the ground.

3. Element according to claim 1 or 2, wherein the connection between base and supporting member is of the bayonet type.

4. Element according to any preceding claim, wherein at the resting surface there are provided means for fixing the panel to the supporting member, in particular a T-shaped groove (22', 22").

5. Element according to any preceding claim, wherein the connecting face of the base is substantially parallel to the surface on which the resting face may be rested.

6. Element according to any preceding claim, wherein both the supporting members and the base have an almost frustoconical shape such that, when the element is assembled, the side walls of the base and of the supporting member are substantially aligned, such that also the element itself has a more or less frustoconical shape.

7. Element according to any preceding claim, made in plastic material, optionally by injection-moulding.

8. Element according to any preceding claim, wherein said base is suitable for being anchored to the ground.

9. Base (1), comprising a connecting face (2) on which two seats (3, 4) open that are suitable for receiving tubes or bars (17', 17") which are arranged on top of one another and in different directions, optionally at right angles to one another, said base (1) being suitable for forming part of an element according to any preceding claim.

10. Supporting member suitable for being connected to a base according to claim 9, in a removable manner, such as to prevent access to said connecting face, such as to form an element according to any one of claims 1 to 8, and having a resting surface (21', 21") for a solar panel (14).

11. Supporting member according to claim 10, comprising, at the resting surface, a projection (20) suitable for preventing sliding of a panel resting on said surface.

12. Supporting member according to claim 10 or 11, wherein said resting surface has two surface portions (28, 29) having a different inclination, optionally having the same value, but opposite orientation.

13. Supporting member according to claim 11 and 12, wherein said projection is present at one of said surface portions only.

14. Supporting structure for solar panels, in particular photovoltaic panels, comprising a plurality of connecting elements according to any one of claims 1 to 8, and a plurality of tubes or bars (17', 17") connecting these connecting elements, each of said tubes or bars being received inside the seats of several bases.

15. Structure according to claim 14, comprising two types of connecting element: a first type (15) with supporting member optionally according to any one of claims 11 to 13, intended for supporting the panel in the edge positioned at the bottom (19'), and a second type (16) with supporting member intended for supporting the panel in the edge positioned at the top (19").

16. Structure according to claim 14 or 15, wherein the base is the same in both types of element, only the supporting member being different, being higher in the case of the second type.
